# EUROPÄISCHE PATENTSCHRIFT

(11) **EP 0 970 843 B1**
(45) Veröffentlichungstag und Bekanntmachung des Hinweises auf die Patenterteilung: **14.04.2004**
(21) Anmeldenummer: 99110986.9
(22) Anmeldetag: 09.06.1999
(51) Int. Cl.: B60N 2/30, B60N 2/36

(54) **Sitzkonstruktion mit Umklappfunktion für Kfz-Sitze**
Seat structure with folding function for automotive seat
Structure de siège avec fonction de rabattement pour siège d'automobile

(30) Priorität: 09.06.1998 DE 29810326 U
(43) Veröffentlichungstag der Anmeldung: 12.01.2000
(73) Patentinhaber: Johnson Controls GmbH, 51399 Burscheid (DE)
(72) Erfinder: Shafry, Gavriel, 58540 Meinerzhagen (DE); Menz, Ralf, 51379 Leverkusen (DE); Hoge, Ralf, 42477 Radevormwald (DE); Münch, Ingo, 42399 Wuppertal (DE)
(74) Vertreter: Kutzenberger, Helga, Dr.

(56) Entgegenhaltungen:
- EP-A- 0 689 954
- DE-B- 1 286 415
- GB-A- 2 009 592
- US-A- 3 171 682

## Beschreibung

Die vorliegende Erfindung betrifft eine Sitzkonstruktion mit Umklappfunktion, insbesondere für Kfz-Rücksitze, mit einem Sitzteil und einer über eine Schwenkachse klappbar angelenkten Rückenlehne, wobei das Sitzteil derart über eine Querachse umklappbar mit einer Schiebeführung verbunden ist, daß ausgehend von einer zum Sitzen geeigneten Gebrauchsposition durch Verschieben und Umklappen des Sitzteils um etwa 180° relativ zu ortsfesten Führungsteilen sowie durch Verschwenken der Rückenlehne um etwa 90° relativ zum Sitzteil die Rückenlehne und das Sitzteil in eine mit ihren unteren bzw. hinteren Rückseiten im wesentlichen in einer Ebene liegende Nichtgebrauchsposition (Ladeposition) überführbar sind.

Eine derartige Sitzkonstruktion ist einerseits aus der DE-AS 1 286 415 sowie andererseits auch aus der DE 44 22 920 A1 und der parallelen EP 0 689 954 A2 bekannt. Mit diesen bekannten Sitzkonstruktionen ist es möglich, insbesondere zur Schaffung eines vergrößerten Laderaums in einem Fahrzeug den Sitz komplett so umzulegen, daß die Rückenlehne und das Sitzteil jeweils mit ihren Rückseiten im wesentlichen in der Ladeebene liegen. Bei den bekannten Sitzkonstruktionen ist allerdings von Nachteil, daß jeweils praktisch der gesamte Sitz um eine einzige, im vorderen Bereich des Sitzteils angeordnete Querachse verschwenkt werden muß. Dies führt zu einer sehr schwierigen Handhabung, weil beim Umlegen praktisch das Gesamtgewicht von Sitzteil und Rückenlehne manuell bewegt werden muß. Zudem kommt es dabei zu völlig unkoordinierten Bewegungen insbesondere durch die schwenkbeweglich angelenkte Rückenlehne, so daß zum Umlegen auch sehr viel Raum benötigt wird und es auch oft zu Kollisionen mit anderen Teilen innerhalb des Fahrzeugs kommt.

Der vorliegenden Erfindung liegt daher die Aufgabe zugrunde, eine Sitzkonstruktion der genannten Art so zu verbessern, daß die Handhabung wesentlich verbessert und vereinfacht wird.

Erfindungsgemäß wird dies durch zusätzliche Führungsmittel derart erreicht, daß das Sitzteil und die Rückenlehne während ihrer Überführungsbewegungen zwischen der Gebrauchsposition und der Nichtgebrauchsposition etwa im Bereich der Schwenkachse definiert geführt werden. Hierbei sind die Führungsmittel zudem bevorzugt so ausgebildet, daß der Bereich der Schwenkachse zwischen Sitzteil und Rückenlehne über die Führungsmittel derart über eine definierte Bewegungskurve hinweg bewegbar ist, daß das Überführen von der einen in die andere Position mit einem minimalen Raumbedarf bezüglich der Bewegungsbereiche von Sitzteil und/oder Rückenlehne durchführbar ist. Erfindungsgemäß wird somit praktisch eine zwangsführung geschaffen, wodurch unkoordinierte Bewegungen weitgehend ausgeschlossen sind. Statt dessen führt zumindest das Sitzteil eine exakt definierte Zwangsbewegung beim Überführen von der einen in die andere Position aus. Durch die definierte Führung im Bereich der Schwenkachse kommt es allenfalls im gegenüberliegenden freien Endbereich der Rückenlehne zu undefinierteren Bewegungen, die jedoch auf einen minimalen Bewegungsbereich begrenzt sind. Die erfindungsgemäß zwangsweise definierte Kinematik führt auch insofern zu einer verbesserten Handhabung, als nicht mehr das gesamte Sitzgewicht manuell bewegt werden muß.

Weitere vorteilhafte Ausgestaltungsmerkmale der Erfindung sind in den Unteransprüchen sowie der folgenden Beschreibung enthalten.

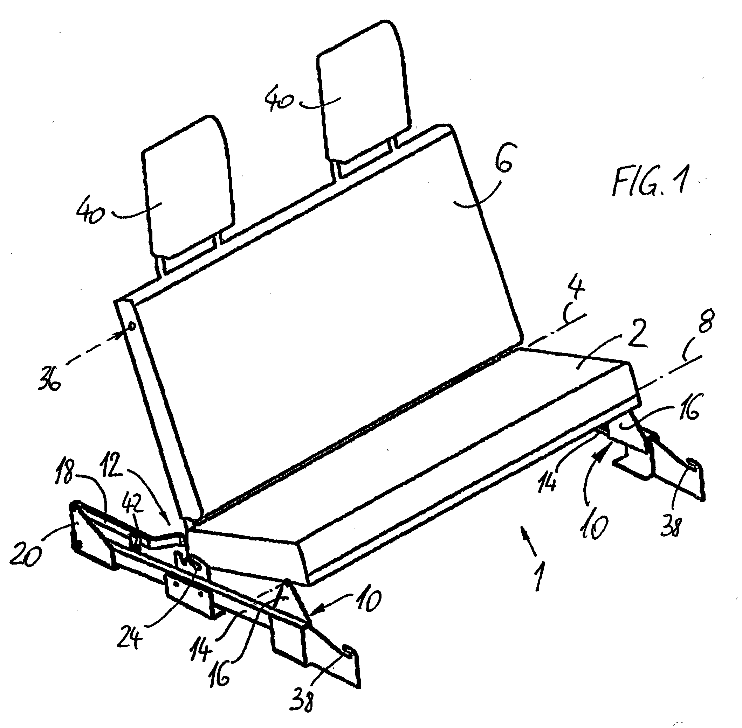

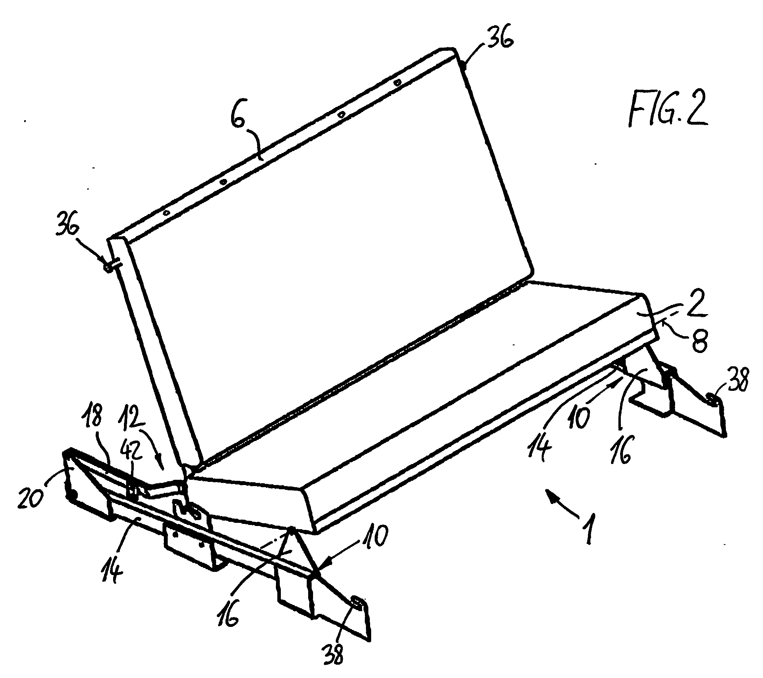

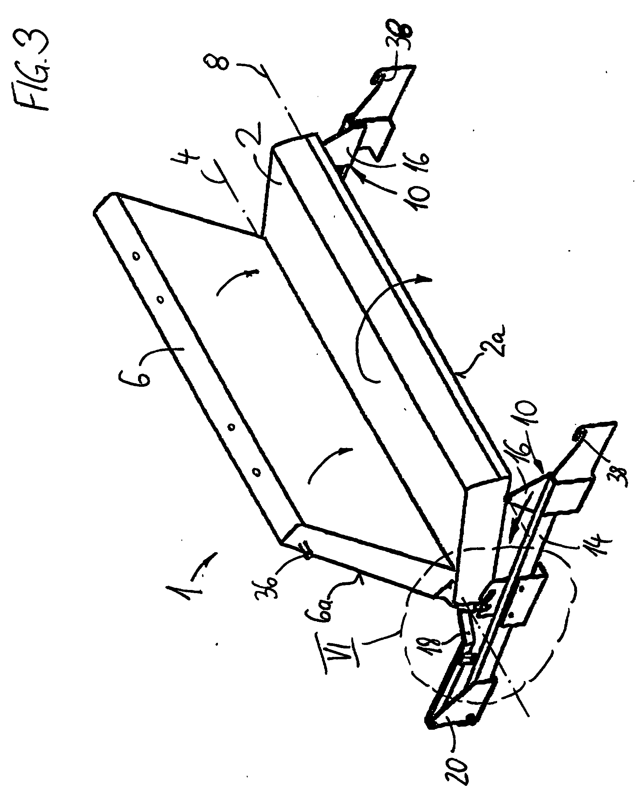

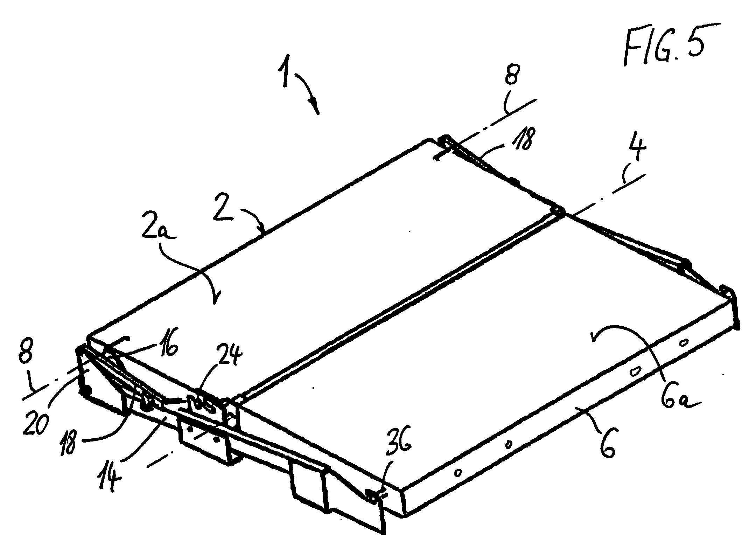

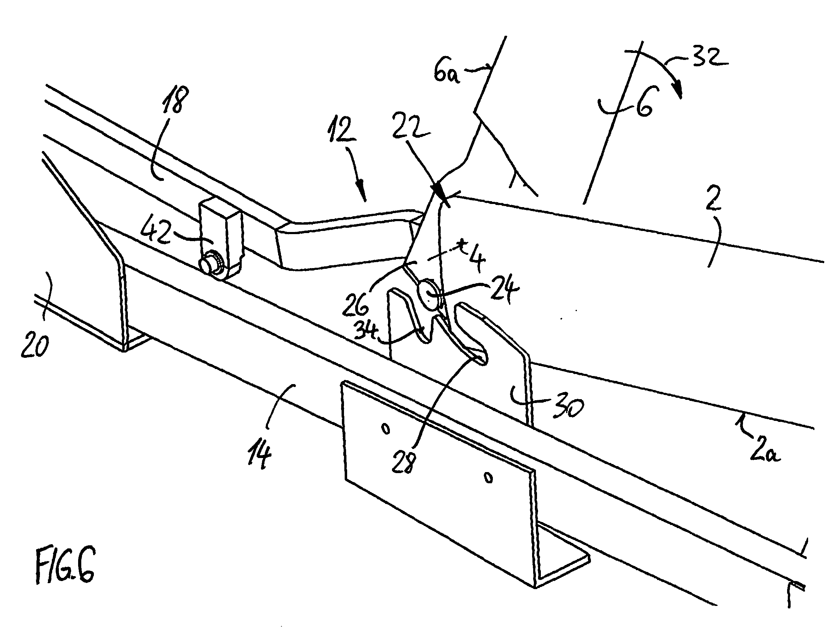

Anhand eines in der Zeichnung dargestellten, bevorzugten Ausführungsbeispiels soll die Erfindung nun näher erläutert werden. Dabei zeigen zunächst die Figuren 1 bis 5 jeweils in schematischen Perspektivansichten die verschiedenen Positionen eines Sitzes beim Überführen von der in Fig. 1 dargestellten Gebrauchsposition in die in Fig. 5 dargestellte Nichtgebrauchs- bzw. Ladeposition. Fig. 6 zeigt eine vergrößerte Darstellung des Bereichs VI in Fig. 3.

In den Zeichnungsfiguren ist eine erfindungsgemäße Sitzkonstruktion 1 beispielhaft in einer Ausführung als Doppelsitzbank veranschaulicht. Es sind jedoch auch Ausführungen als Einzelsitz oder Mehrfachsitzbank möglich. Die Sitzkonstruktion 1 besteht aus einem Sitzteil 2 (Sitzpolster) und einer über eine Schwenkachse 4 klappbar angelenkten Rückenlehne 6. Das Sitzteil 2 ist einerseits über eine Querachse 8 umklappbar geführt, und zwar um einen Winkel von etwa 180°. Andererseits ist das Sitzteil 2 - insbesondere über die Querachse 8 - mit einer Schiebeführung 10 verbunden.

Diese Anlenkung und Führung des Sitzteils 2 ist derart ausgelegt, daß ausgehend von der zum Sitzen geeigneten Gebrauchsposition (s. Fig. 1) durch Verschieben und Umklappen des Sitzteils 2 um etwa 180° relativ zu ortsfesten Führungsteilen sowie durch Verschwenken der Rückenlehne 6 um einen Winkel von etwa 90° relativ zum Sitzteil 2 der gesamte Sitz mit der Rückenlehne 6 und dem Sitzteil 2 in die in Fig. 5 veranschaulichte Nichtgebrauchsposition überführbar ist, wobei dann das Sitzteil 2 und die Rückenlehne 6 jeweils mit ihren unteren bzw. hinteren Rückseiten 2a und 6a im wesentlichen in einer gemeinsamen Ladeebene liegen. Der Bewegungsablauf zum Überführen von der Gebrauchsstellung nach Fig.1 in die Nichtgebrauchsstellung nach Fig. 5 bzw. umgekehrt wird durch die Figuren 1 bis 5 und die eingezeichneten Pfeile deutlich.

Erfindungsgemäß sind nun zusätzliche Führungsmittel 12 derart vorgesehen, daß die Sitzkonstruktion 1 - zusätzlich zu der Führung des Sitzteils 2 über die Querachse 8 und die Schiebeführung 10 - auch im Bereich der Schwenkachse 4 zwischen Sitzteil 2 und Rückenlehne 6 während ihrer Überführungsbewegungen stets definiert geführt ist.

An dieser Stelle sei bemerkt, daß sich die nachfolgende Beschreibung auf eine Sitzanordnung bezieht, die in der Gebrauchsposition in Fahrtrichtung ausgerichtet ist, d.h. mit dem Sitzteil 2 nach vorne in Fahrtrichtung weist. Selbstverständlich wäre alternativ dazu auch eine umgekehrte Ausrichtung entgegen der Fahrtrichtung möglich, so daß die nachfolgend verwendeten Begriffe "vorne" und "hinten" durchaus auch ausgetauscht werden können.

Die Schiebeführung 10 besteht aus zwei seitlichen, zueinander parallelen Führungsschienen 14, die innerhalb des Fahrzeugs ortsfest und im wesentlichen etwa horizontal und parallel zur Fahrzeug-Längsachse angeordnet sind. Mit jeder Führungsschiene 14 ist ein Führungsschlitten 16 verschiebbar verbunden, wobei die Führungsschlitten 16 in den Seitenbereichen über die Querachse 8 schwenkbeweglich mit dem Sitzteil 2 verbunden sind. Der über die Führungsmittel 12 geführte Bereich der das Sitzteil 2 mit der Rückenlehne 6 verbindenden Schwenkachse 4 ist in beiden Positionen (s. Fig. 1 und 5) von Sitzteil 2 und Rückenlehne 6 in einem etwa mittigen Bereich der Längserstreckung der Führungsschienen 14 angeordnet und dabei über die erfindungsgemäßen Führungsmittel 12 derart in einer zu den Führungsschienen 14 im wesentlichen senkrechten, vertikalen Richtung beweglich geführt, daß sich beim Überführen von der einen in die andere Position der Bereich der Schwenkachse 4 etwa vertikal zu den Führungsschienen 14 nach oben wegbewegt, so daß das Sitzteil 2 unter gleichzeitigem Umlegen um etwa 180° mit den Führungsschlitten 16 längs der Führungsschienen 14 praktisch unter dem dazu angehobenen Bereich der Schwenkachse 4 hindurch vom vorderen zum hinteren Schienenbereich bzw. umgekehrt bewegbar ist.

Die Führungsmittel 12 sind vorzugsweise durch zwei seitliche Schwenkhebel 18 gebildet, die einendig im Bereich der Schwenkachse 4, und zwar insbesondere koaxial zu dieser, sowie anderendig an ortsfesten Lagerelementen 20 angelenkt sind. Dabei sind die Lagerelemente 20 in einem Bereich angeordnet, der in der Gebrauchsposition auf der dem Sitzteil 2 entgegengesetzten Seite (hinter) der Rückenlehne 6 bzw. in der Nichtgebrauchsposition im Bereich des Sitzteils 2 bzw. in der Nähe der Führungsschlitten 16 liegt. Aufgrund der Ausgestaltung der Führungsmittel als Schwenkhebel 18 führt somit der Bereich der Schwenkachse 4 bei der Überführungsbewegung eine Kreisbogenbewegung nach oben und wieder zurück nach unten aus. Dabei sind der von der Länge und Form der Schwenkhebel 18 bestimmte Radius der Kreisbogenbewegung und die Lage der Gelenkpunkte so abgestimmt, daß eine Zwangsbewegung mit geringstmöglichem Raumbedarf erreicht wird.

Zweckmäßigerweise sind Verriegelungsmittel zum Arretieren von Sitzteil 2 und Rückenlehne 6 in ihren beiden verschiedenen Positionen vorgesehen. Einerseits handelt es sich um in der Zeichnung nicht erkennbare Verriegelungsmittel, die in einem die Schwenkachse 4 bildenden Gelenk 22 (s. hierzu Fig. 6) zwischen Sitzteil 2 und Rückenlehne 6 angeordnet sind. Diese Verriegelungsmittel dienen in an sich bekannter Weise zum lösbaren Arretieren der Rückenlehne 6 in einem bestimmten oder einstellbaren Winkel (variable Lehnenneigung) relativ zum Sitzteil 2 in der Gebrauchsposition. Durch Entriegeln dieser Verriegelungsmittel läßt sich dann die Rückenlehne 6 relativ zum Sitzteil 2 umlegen.

Als Verriegelungsmittel sind ferner bolzenartige Riegelelemente 24 vorgesehen, und zwar an einem sich wippenartig über die Schwenkachse 4 hinaus erstreckenden Abschnitt 26 der Rückenlehne 6. Hierzu wird insbesondere auf Fig. 6 verwiesen. Diese Riegelelemente 24 greifen in der Gebrauchsposition in schlitzartige Riegelöffnungen 28 von ortsfesten Widerlagern 30 ein. Die Schlitzform der Riegelöffnungen 28 ist relativ zu den Riegelelementen 24 so ausgebildet, daß beim nach hinten Verschwenken der Rückenlehne 6 die Riegelelemente 24 selbsttätig auf einer Kreisbahn in die entsprechend geformten Riegelöffnungen 28 eingreifen. Ein Lösen dieser Verriegelung ist demzufolge durch nach vorne umklappen der Rückenlehne 6 in Pfeilrichtung 32 gemäß Fig. 6 möglich.

Wie sich aus Fig. 5 ergibt, liegen die Riegelelemente 24 in der Nichtgebrauchsstellung in Lagerausnehmungen 34 der Widerlager 30. Die Lagerausnehmungen 34 liegen dabei in Verstellrichtung versetzt zu den Riegelöffnungen 28.

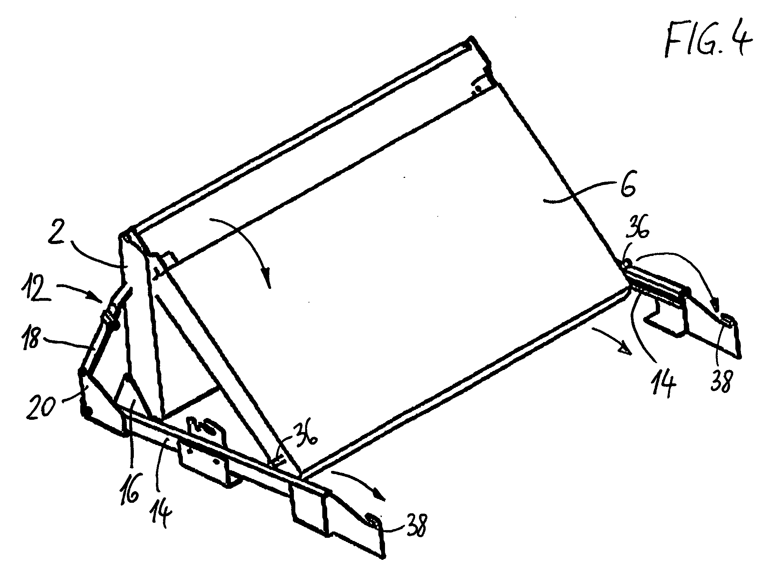

Als weitere Verriegelungsmittel weist die Rückenlehne 6 in ihrem oberen, d.h. von der Schwenkachse 4 entfernt liegenden Endbereich seitliche, bolzenartige Riegelelemente 36 auf, die in der Nichtgebrauchsstellung (s. Fig. 4 und 5) in schlitzartige Riegelöffnungen 38 im vorderen, ortsfesten Endbereich der Führungsschienen 14 eingreifen. Hierbei ist es besonders vorteilhaft, wenn die Riegelelemente 36 in der Rückenlehne 6 versenkbar gelagert und zur Betätigung insbesondere mit einer Kopfstützenhalterung derart zusammenwirken, daß bei montierter Kopfstütze 40 die Riegelelemente 36 in ihrer versenkten Stellung gehalten (Fig. 1) und durch Demontage der Kopfstütze 40 selbsttätig in ihre seitlich vorspringende, riegelbereite Lage freigegeben werden. Diese Maßnahme ist aus Sicherheitsgründen von Vorteil, da in der Gebrauchsposition Unfall- und Verletzungsgefahren durch seitlich vorspringende Teile vermieden werden. Zudem müssen ohnehin vor dem Überführen in die Nichtgebrauchsposition die Kopfstützen 40 entfernt werden.

In einer weiteren vorteilhaften Ausgestaltung der Erfindung ist mindestens ein Federelement oder dergleichen motorischer Kraftantrieb zur Unterstützung des Bewegungsablaufs beim Überführen zwischen den Gebrauchs- und Nichtgebrauchspositionen vorgesehen. Hierbei kann es sich beispielsweise um mindestens eine Gasdruckfeder handeln, die z.B. an einem in den Zeichnungsfiguren erkennbaren Lagerelement 42 mindestens eines der beiden Schwenkhebel 18 angreifen kann. Hierdurch wird ein besonders guter Bedienungskomfort erreicht, indem die Sitzkonstruktion 1 nach dem Entriegeln praktisch selbsttätig im Bereich der Schwenkachse 4 nach oben gedrückt wird.

## Patentansprüche

1. Sitzkonstruktion (1) mit Umklappfunktion, insbesondere für Kfz-Rücksitze, mit einem Sitzteil (2) und einer über eine Schwenkachse (4) klappbar angelenkten Rückenlehne (6), wobei das Sitzteil (2) derart über eine Querachse (8) umklappbar mit einer Schiebeführung (10) verbunden ist, daß ausgehend von einer zum Sitzen geeigneten Gebrauchsposition durch Verschieben und Umklappen des Sitzteils (2) um etwa 180° relativ zu ortsfesten Führungsteilen sowie durch Verschwenken der Rückenlehne (6) um etwa 90° relativ zum Sitzteil (2) die Rückenlehne (6) und das Sitzteil (2) in eine mit ihren unteren bzw. hinteren Rückseiten (2a, 6a) im wesentlichen in einer Ebene liegende Nichtgebrauchsposition überführbar sind,
**gekennzeichnet durch** zusätzliche Führungsmittel (12) derart, daß das Sitzteil (2) und die Rückenlehne (6) während ihrer Überführungsbewegungen zwischen der Gebrauchsposition und der Nichtgebrauchsposition etwa im Bereich der Schwenkachse (4) definiert geführt werden.

2. Sitzkonstruktion nach Anspruch 1,
**dadurch gekennzeichnet, daß** der Bereich der Schwenkachse (4) über die Führungsmittel (12) derart über eine definierte Bewegungskurve hinweg bewegbar ist, daß das Überführen von der einen in die andere Position mit einem minimalen Raumbedarf bezüglich der Bewegungsbereiche von Sitzteil (2) und/oder Rückenlehne (6) durchführbar ist.

3. Sitzkonstruktion nach Anspruch 1 oder 2,
**dadurch gekennzeichnet, daß** die Schiebeführung (10) aus ortsfesten, im wesentlichen etwa horizontalen Führungsschienen (14) sowie mit dem Sitzteil (2) über die Querachse (8) verbundenen Führungsschlitten (16) besteht, wobei der Bereich der Schwenkachse (4) in beiden Positionen von Sitzteil (2) und Rückenlehne (6) in einem etwa mittigen Bereich der Führungsschienen (16) angeordnet und über die Führungsmittel (12) derart im wesentlichen senkrecht zu den Führungsschienen (14) beweglich ist, daß sich beim Überführen der Bereich der Schwenkachse (4) von den Führungsschienen (14) etwa vertikal wegbewegt und das Sitzteil (2) unter gleichzeitigem Umlegen um etwa 180° mit dem Führungsschlitten (16) längs der Führungsschienen (14) bewegbar ist.

4. Sitzkonstruktion nach einem der Ansprüche 1 bis 3,
**dadurch gekennzeichnet, daß** die Führungsmittel (12) durch Schwenkhebel (18) gebildet sind, die einendig im Bereich der Schwenkachse (4) und zwar insbesondere koaxial zu dieser, sowie anderendig an ortsfesten Lagerelementen (20) angelenkt sind.

5. Sitzkonstruktion nach Anspruch 4,
**dadurch gekennzeichnet, daß** die Lagerelemente (20) in einem Bereich angeordnet sind, der in der Gebrauchsposition auf der dem Sitzteil (2) entgegengesetzten Seite der Rückenlehne (6) bzw. in der Nichtgebrauchsposition im Bereich des Sitzteils (2) liegt.

6. Sitzkonstruktion nach einem der Ansprüche 1 bis 5,
**gekennzeichnet durch** Verriegelungsmittel zum Arretieren von Sitzteil (2) und Rückenlehne (6) in ihren beiden verschiedenen Positionen.

7. Sitzkonstruktion nach einem der Ansprüche 1 bis 6,
**dadurch gekennzeichnet, daß** in einem die Schwenkachse (4) bildenden Gelenk (22) zwischen Sitzteil (2) und Rückenlehne (6) entriegelbare Verriegelungsmittel zum lösbaren Arretieren der Rückenlehne (6) in einem bestimmten oder einstellbaren Winkel relativ zum Sitzteil (2) in der Gebrauchsposition angeordnet sind.

8. Sitzkonstruktion nach Anspruch 6 oder 7,
**dadurch gekenzeichnet,** daß die Rückenlehne (6) an einem sich wippenartig über die Schwenkachse (4) hinaus erstreckenden Abschnitt (26) bolzenartige Riegelelemente (24) aufweist, die in der Gebrauchsposition in schlitzartige Riegelöffnungen (28) von ortsfesten Widerlagern (30) eingreifen.

9. Sitzkonstruktion nach Anspruch 8,
**dadurch gekennzeichnet, daß** die Riegelelemente (24) in der Nichtgebrauchsstellung in Lagerausnehmungen (34) der Widerlager (30) liegen.

10. Sitzkonstruktion nach einem der Ansprüche 6 bis 9,
**dadurch gekennzeichnet, daß** die Rückenlehne (6) in ihrem oberen, von der Schwenkachse (4) entfernt liegenden Endbereich seitliche, bolzenartige Riegelelemente (36) aufweist, die in der Nichtgebrauchsstellung in schlitzartige Riegelöffnungen (38) eingreifen.

11. Sitzkonstruktion nach Anspruch 10,
**dadurch gekennzeichnet, daß** die Riegelelemente (36) in der Rückenlehne (6) versenkbar gelagert und zur Betätigung insbesondere mit einer Kopfstützenhalterung derart zusammenwirken, daß bei montierter Kopfstütze (40) die Riegelelemente (36) in ihrer versenkten Stellung gehalten und durch Demontage der Kopfstütze (40) selbsttätig in ihre seitlich vorspringende, riegelbereite Lage freigegeben werden.

12. Sitzkonstruktion nach einem der Ansprüche 1 bis 11,
**gekennzeichnet durch** mindestens ein Kraftantriebselement zur Unterstützung des Bewegungsablaufs beim Überführen zwischen den Gebrauchsund Nichtgebrauchspositionen.

## Claims

1. A seat construction (1) having a fold-away function, in particular for rear seats of motor vehicles, having a seat part (2) and a back rest (6) which is hinged such that it may be folded down about a pivot axis (4), the seat part (2) being connected to a slide guide (10) such that it may be rotated about a transverse axis (8) in a manner such that, starting from a functional position suitable for the seat to be sat upon, by sliding and rotating the seat part (2) through approximately 180° relative to stationary guide parts, and by pivoting the back rest (6) through approximately 90° relative to the seat part (2), the back rest (6) and the seat part (2) may be transferred into a non-functional position in which their respective lower and rear reverse sides (2a, 6a) are located substantially in one plane, **characterized by** additional guide means (12) such that the seat part (2) and the back rest (6) are guided in defined manner approximately in the region of the pivot axis (4) during their transfer movements between the functional position and the non-functional position.

2. A seat construction according to Claim 1, **characterized in that**, by way of the guide means (12), the region of the pivot axis (4) may be moved beyond a defined movement curve, such that transfer from the one position into the other position may be carried out with a minimal spatial requirement with respect to the movement regions of the seat part (2) and/or the back rest (6).

3. A seat construction according to Claim 1 or 2, **characterized in that** the slide guide (10) comprises stationary, substantially approximately horizontal guide rails (14) and guide blocks (16), the latter connected to the seat part (2) at the point of the transverse axis (8), the region of the pivot axis (4) being arranged in an approximately central region of the guide rails (16) in both positions of the seat part (2) and the back rest (6) and being movable substantially perpendicular to the guide rails (14) by way of the guide means (12), such that, during transfer, the region of the pivot axis (4) is moved approximately vertically away from the guide rails (14), and the seat part (2) may be moved along the guide rails (14) by means of the guide block (12) whilst at the same time turning over through approximately 180°.

4. A seat construction according to one of Claims 1 to 3, **characterized in that** the guide means (12) are formed by pivotal levers (18) which are joined in articulated manner, at one end in the region of the pivot axis (4), and in particular coaxially thereto, and at the other end to stationary bearing elements (20).

5. A seat construction according to Claim 4, **characterized in that** the bearing elements (20) are arranged in a region which, in the functional position, is located on that side of the back rest (6) which is opposite the seat part (2) and, in the non-functional position, is located in the region of the seat part (2).

6. A seat construction according to one of Claims 1 to 5, **characterized by** locking means for fixing the seat part (2) and the back rest (6) in their two different positions.

7. A seat construction according to one of Claims 1 to 6, **characterized in that** unlockable locking means for releasably fixing the back rest (6) in the functional position at a particular or adjustable angle relative to the seat part (2) are arranged in a joint (22) forming the pivot axis (4) between the seat part (2) and the back rest (6).

8. A seat construction according to Claim 6 or 7, **characterized in that**, on a portion (26) extending beyond the pivot axis (4) in the manner of a rocker, the back rest (6) has pin-type locking elements (24) which, in the functional position, engage in slot-type locking openings (28) in stationary abutments (30).

9. A seat construction according to Claim 8, **characterized in that**, in the non-functional position, the locking elements (24) are located in bearing cutouts (34) in the abutments (30).

10. A seat construction according to one of Claims 6 to 9, **characterized in that**, in its upper end region which is remote from the pivot axis (4), the back rest (6) has lateral, pin-type locking elements (36) which, in the non-functional position, engage in slot-type locking openings (38).

11. A seat construction according to Claim 10, **characterized in that** the locking elements (36) are retractably mounted in the back rest (6) and, for the purpose of actuation, cooperate in particular with a headrest mounting such that the locking elements (36) are held in their retracted position when the head rest (40) is mounted and, as a result of detaching the head rest (40), are automatically released into their laterally projecting position in which they are ready to perform the locking action.

12. A seat construction according to one of Claims 1 to 11, **characterized by** at least one mechanical drive element for assisting the movement sequence during transfer between the functional and non-functional positions.

## Revendications

1. Construction de siège (1) à fonction de rabattement, en particulier pour sièges arrière de véhicules automobiles, comprenant une partie assise (2) et un dossier (6) articulé de façon rabattable autour d'un axe de pivotement (4), la partie assise (2) étant reliée à un guide de coulissement (10) de façon à pouvoir être rabattue autour d'un axe transversal (8), de telle manière que, par coulissement et basculement de la partie assise (2) d'environ 180° par rapport à des parties de guidage fixes, ainsi que par pivotement du dossier (6) d'environ 90° par rapport à la partie assise (2), le dossier (6) et la partie assise (2) puissent être transférés d'une position d'utilisation appropriée pour la position assise à une position d'inutilisation, dans laquelle leurs faces respectivement inférieure et arrière (2a, 6a) soient étendues sensiblement dans un plan,
**caractérisée par** des moyens de guidage additionnels (12) de telle manière que la partie assise (2) et le dossier (6) soient guidés de façon définie, à peu près dans la région de l'axe de pivotement (4), pendant leurs mouvements de transfert entre la position d'utilisation et la position d'inutilisation.

2. Construction de siège selon la revendication 1,
**caractérisée en ce que** la région de l'axe de pivotement (4) peut être déplacée, sur une courbe de trajectoire définie, à l'aide des moyens de guidage (12), de telle manière que le transfert d'une position à l'autre puisse être exécuté en ne demandant qu'un minimum de place dans les régions de déplacement de la partie assise (2) et/ou du dossier (6).

3. Construction de siège selon la revendication 1 ou 2,
**caractérisée en ce que** le guide de coulissement (10) est constitué par des rails de guidage (14) fixes en position, essentiellement à peu près horizontaux, ainsi que par des coulisseaux de guidage (16) reliés à la partie assise (2) au moyen de l'axe transversal (8), la région de l'axe de pivotement (4) étant disposée dans une région à peu près centrale des coulisseaux de guidage (16) dans les deux positions de la partie assise (2) et du dossier (6), et pouvant se déplacer, à l'aide des moyens de guidage (12), sensiblement perpendiculairement aux rails de guidage (14), de telle manière que, lors du transfert, la région de l'axe de pivotement (4) s'éloigne à peu près verticalement des rails de guidage (14) et que la partie assise (2) puisse se déplacer avec le coulisseau de guidage (16) le long des rails de guidage (14) en se retournant simultanément d'environ 180°.

4. Construction de siège selon une des revendications 1 à 3,
**caractérisée en ce que** les moyens de guidage (12) sont formés par des leviers pivotants (18) qui sont articulés, à une extrémité, dans la région de l'axe de pivotement (4), en particulier plus précisément coaxialement à cet axe et, à l'autre extrémité, sur des éléments de palier (20) fixes en position.

5. Construction de siège selon la revendication 4,
**caractérisée en ce que** les éléments de palier (20) sont disposés dans une région qui se trouve sur le côté du dossier (6) qui est à l'opposé de la partie assise (2) dans la position d'utilisation et qui se trouve dans la région de la partie assise (2) dans la position d'inutilisation.

6. Construction de siège selon une des revendications 1 à 5,
**caractérisée par** des moyens de verrouillage destinés à bloquer la partie assise (2) et le dossier (6) dans leurs deux positions différentes.

7. Construction de siège selon une des revendications 1 à 6,
**caractérisée en ce que**, dans une articulation (22) entre la partie assise (2) et le dossier (6), qui forme l'axe de pivotement (4), sont disposés des moyens de verrouillage déverrouillables destinés à bloquer le dossier (6) de façon déblocable dans un angle déterminé, ou réglable par rapport à la partie assise (2), dans la position d'utilisation.

8. Construction de siège selon la revendication 6 ou 7,
**caractérisée en ce que** le dossier (6) présente, sur un segment (26) qui se prolonge au-delà de l'axe de pivotement (4) à la façon d'un fléau, des éléments de verrouillage (24) en forme de tourillons qui, dans la position d'utilisation, s'engagent dans des ouvertures de verrouillage (28) en forme de fentes appartenant à des butées (30) fixes en position.

9. Construction de siège selon la revendication 8,
**caractérisée en ce que**, dans la position d'inutilisation, les éléments de verrouillage (24) se trouvent dans des évidements de portée (34) des butées (30).

10. Construction de siège selon une des revendications 6 à 9,
**caractérisée en ce que**, dans sa région d'extrémité supérieure, éloignée de l'axe de pivotement (4), le dossier (6) présente des éléments de verrouillage latéraux (36) en forme de tourillons qui, dans la position d'inutilisation, s'engagent dans des ouvertures de verrouillage (38) en forme de fentes.

11. Construction de siège selon la revendication 10,
**caractérisée en ce que** les éléments de verrouillage (36) sont montés dans le dossier (6) de façon à pouvoir être escamotés et, pour l'actionnement, coopèrent en particulier avec un support d'appui-tête de telle manière que les éléments de verrouillage (36) soient maintenus dans leur position escamotée lorsque l'appui-tête (40) est monté et qu'ils soient libérés automatiquement sous l'effet du démontage de l'appui-tête (40) pour prendre leur position en saillie latérale, prête au verrouillage.

12. Construction de siège selon une des revendications 1 à 11,
**caractérisée par** au moins un élément d'entraînement à force destiné à assister le déroulement du mouvement lors du transfert entre les positions d'utilisation et d'inutilisation.
